# EUROPÄISCHE PATENTSCHRIFT

(11) **EP 1 686 915 B1**
(45) Veröffentlichungstag und Bekanntmachung des Hinweises auf die Patenterteilung: **21.07.2010**
(21) Anmeldenummer: 04798074.3
(22) Anmeldetag: 25.11.2004
(51) Int. Cl.: A61C 13/00

(54) **VERFAHREN ZUR HERSTELLUNG EINES FORMTEILS**
METHOD FOR PRODUCING A MOLDED PIECE
PROCEDE DE PRODUCTION D'UNE PIECE MOULEE

(30) Priorität: 26.11.2003 EP 03027104; 04.06.2004 DE 102004027558
(43) Veröffentlichungstag der Anmeldung: 09.08.2006
(73) Patentinhaber: DeguDent GmbH, 63457 Hanau-Wolfgang (DE)
(72) Erfinder: VON SCHROETER, Philip, 63517 Rodenbach (DE); FECHER, Stefan, 63867 Johannesberg (DE)
(74) Vertreter: Stoffregen, Hans-Herbert
(86) Internationale Anmeldenummer: PCT/EP2004/013359
(87) Internationale Veröffentlichungsnummer: WO 2005/051220

(56) Entgegenhaltungen:
- WO-A-02/45614
- DE-A- 19 930 564

## Beschreibung

Die Erfindung bezieht sich auf ein Verfahren zur Herstellung eines Formteils, insbesondere dentalen Objekts wie Käppchen oder Brückengerüst, wobei das Formteil aus einem Rohling durch spanende Bearbeitung herausgearbeitet und die Bearbeitung mit Durchtrennen einer Verbindung zwischen dem Formteil und verbleibendem Rohling beendet wird.

Bei konventionellen Methoden zur Herstellung von künstlichen Zahnkronen bzw. Zahnbrücken wird nach der zahnärztlichen Präparation ein Abdruck des Kiefers angefertigt, um über Gipsabformung ein Positivmodell der Situation im Mund herzustellen. Auf ein entsprechendes so genanntes Meistermodell kann ein Grundgerüst in Wachs oder Kunststoff modelliert werden, um sodann z.B. durch Wachsausschmelzverfahren oder Kopierfräsen ein Modell des Grundgerüsts in Metall auszuführen und gegebenenfalls mit Porzellan zu überbrennen.

Der EP-A-0 389 461 ist ein Verfahren zur Herstellung von Zahnkronen-Onlays zu entnehmen, wobei zunächst ein Abdruck der auszufüllenden Zahnkavität und sodann durch Kopierfräsen aus einem verdichteten oder vorgesinterten Rohling ein Körper hergestellt wird, der zur Herstellung des Onlays zu seiner Enddichte gesintert wird. Allerdings sind Zahnkronen und -brücken zu Onlays verschiedene Produkte, die zahnmedizinische Indikation ist eine andere. So werden Onlays in Kavitäten eingepasst und bzgl. der geometrischen Form stets konvex geformt. Demgegenüber werden Zahnkronen bzw. -brücken auf einen Zahnstumpf aufgepasst und haben die Form eines Käppchens. Hierdurch bedingt ergeben sich dünn auslaufende Berandungen, die technologisch schwierig zu handhaben sind.

Aus der WO-A-199947065 ist ein Verfahren zur Herstellung von einem auf wenigstens einen vorpräparierten Zahnstumpf aufpassbaren künstlichen Zahnersatz aus gepresstem, feinem Keramikpulver bekannt, wobei unter Berücksichtigung der Schrumpfung die innere Oberfläche eines vollkeramischen Grundgerüsts aus biologisch verträglichem Material berechnet wird, indem die geometrischen Verhältnisse im Mund des Patienten abgetastet und digitalisiert, die Daten um einen die Sinterschrumpfung exakt kompensierenden Vergrößerungsfaktor in allen Richtungen linear vergrößert und sodann durch Materialabtrag aus einem Rohling ein Grundgerüst mit einer inneren und einer äußeren Oberfläche herausgearbeitet wird.

Ein entsprechendes Herstellungsverfahren beinhaltet eine Anstiftung des spanend zu bearbeitenden, also zu fräsenden bzw. zu schleifende Formlings zumeist an dessen äußeren Flanken, wobei bei dentalen Objekten eine Anstiftung bukkal oder lingual, selten approximal erfolgt. Während der Bearbeitung wird der Formling durch die Anstiftung gehalten, um nach Beendigung grob abgetrennt und manuell so bearbeitet zu werden, dass die Wandstärke im betreffenden Bereich etwa der des übrigen Formlings, also bei einem dentalen Objekt die eines Käppchens oder Zahngerüsts aufweist. Bei weichen Werkstoffen ist die Nachbearbeitung mit einem erheblichen Risiko der Zerstörung verbunden, wohingegen bei harten Werkstoffen ein hoher Zeit- und Werkzeugaufwand erforderlich ist Des Weiteren ist das Risiko gegeben, dass bei der Nachbearbeitung eine empfohlene Wandstärke unterschritten wird.

Nach der WO-A-200245614, worauf die zweiteilige Form des Anspruchs 1 basiert, wird z. B. eine Zahnbrücke aus einem Keramikrohling mittels eines Fräswerkzeuges hergestellt, die über Haltestege mit dem verbleibenden Rest des Rohlings verbunden ist.

Bei einem Verfahren zur Herstellung eines zahntechnischen Teils wie Zahnkrone wird ein Rohling stets bereichsweise in einer Einbettmasse fixiert, um von der Einbettmasse unbedecktem Bereich spanend zu bearbeiten (DE-A-199 30 564).

Alternative Verfahren zur Herstellung von dentalen Formteilen sehen anstelle einer äußeren Anstiftung einen entfernbaren Sockel vor, mittels dem der zu bearbeitende Formkörper fixiert wird.

Eine Anstiftung erübrigt sich auch bei dem sogenannten Tauchverfahren. Dabei wird durch Tauchen eines Zahnstumpfmodells in einen keramischen Schlicker eine Haftung zum Stumpf hergestellt, die einer äußeren Fräsbearbeitung standhält. Nachteilig sind jedoch die geringe Festigkeit der Schlickerkeramik sowie Probleme der Materialkonsistenzen und -lagerung.

Der vorliegenden Erfindung liegt das Problem zu Grunde, ein Verfahren zuvor beschriebener Art so weiterzubilden, dass eine präzise Bearbeitung des Rohlings zur Herstellung eines Formteil, insbesondere dentalen Objekts wie Käppchens oder Brückengerüsts möglich ist, ohne dass eine aufwendige bzw. risikobehaftete Nachbearbeitung erforderlich ist. Auch soll ein einfaches Lösen des Formteils nach dessen Bearbeitung möglich sein.

Zur Lösung des Problems sieht die Erfindung, wie in Anspruch 1 beansprucht, im Wesentlichen vor, dass das Formteil aus dem Rohling derart herausgearbeitet wird, dass bei Fertigstellung von Außen- und Innenkontur des Formlings dieser mit dem Rohling über eine Verbindung in Form eines umlaufenden Stegs oder einer Durchbrechungen aufweisenden membranartigen Verbindung verbunden bleibt und dass anschließend die Verbindung durchtrennt wird.

Mit anderen Worten wird das Formteil aus dem Rohling derart herausgearbeitet, dass bei Fertigstellung von Außen- und Innenkontur des Formlings dieser mit dem Rohling weiterhin mit zumindest einer bereichsweise umlaufenden steg- oder membranartigen Verbindung verbunden bleibt, die anschließend durchtrennt wird.

Ist die Verbindung ein umlaufender Steg, erfolgt insbesondere ein Durchtrennen durch zirkuläres, d.h. umlaufendes Fräsen. Dabei sollte das Formteil derart bearbeitet werden, dass der umlaufende Steg am äußeren Rand des Formteils des dentalen Objekts verläuft. Bei einer Bearbeitung von zwei Seiten, nämlich von okklusal und von basal, befindet sich der umlaufende Steg grundsätzlich im Bereich des größten Umfangs des Käppchens, in der Regel an oder nahe an dessen Rand.

Erfindungsgemäß wird ein spanendes Bearbeiten eines Formteils mit einer Strategie vorgeschlagen, bei der aus einem zum Beispiel vorgesinterten oder dichtgesinterten Keramikrohteil eine Bearbeitung durch insbesondere Schruppen und Schlichten von Innen- und Außenkontur dergestalt erfolgt, dass Außenbearbeitung des Formlings mit der Entfernung des umlaufenden Stegs, der auch als zirkulärer Rand zu bezeichnen ist, beendet wird, wodurch ein anschließendes Nachbearbeiten dem Grunde nach überflüssig wird.

Alternativ verbleibt das von der Außen- und Innenkontur fertiggestellte Formteil mit dem Rohling über eine membranartige umlaufende Verbindung verbunden, die Durchbrechungen aufweist, also perforiert ist, um sodann z.B. durch manuelle Krafteinwirkung oder durch Verwendung eines Werkzeugs wie eines Skalpells die Membran zu durchbrechen und das Formteil von dem Rohling zu lösen. Sodann bedarf es nur noch einer geringen Nacharbeit, um die Reste der Haltemembran zu entfernen.

Die Dicke der membranartigen Verbindung vor dem Durchbrechen dieser sollte vorzugsweise zwischen 50 µm und 500 µm liegen. Durch eine diesbezügliche Dimensionierung ist sichergestellt, dass das Formteil beim Lösen von dem Rohling nicht beschädigt werden kann.

Dadurch, dass eine Anstiftung im Sinne des vorbekannten Standes der Technik nicht abgetrennt werden muss, ergeben sich Ersparnisse bei der maschinellen Bearbeitung. Auch entfällt ein aufwendiges Nachbearbeiten mit dem Risiko, dass die Wandung im Bereich der Verbindung mit dem Rohling vorgegebene Werte unterschreitet. Vielmehr erfolgt erfindungsgemäß eine Risikominimierung bei der manuellen Nachbearbeitung, da bei einem umlaufenden Steg als Verbindung allein ein kurzes zirkuläres Verputzen des äußeren Formteilrands erfolgt, ohne dass es einer Bearbeitung der Wandung bedarf. Eine Automatisierung wird vereinfacht, auch ergibt sich eine einfache CAD-Modellierung. Bei einer Haltemembran als Verbindung können die verbliebenen Reste der Haltemembran durch Schaben oder Fräsen mit einem Handwerkzeug entfernt werden.

Insbesondere ist vorgesehen, dass zur Ausbildung des Formteils zunächst ein Schruppen (Grobfräsen) der Außenseite und dann der Innenseite vorzugsweise mit meanderförmig verfahrbarem Fräswerkzeug erfolgt. Anschließend erfolgt ein Schlichten (Feinfräsen) der Außenkontur und sodann Innenkontur, wobei eine zirkuläre Strategie zu bevorzugen ist.

Zum Schluss kann ein Schlichten (Feinfräsen) der Innenseite bzw. Innenkontur erfolgen, um nach vollständiger Bearbeitung des Formteils die im äußeren Randbereich des Formteils noch verbleibende umlaufende Verbindung (Steg) durch zirkuläres Ausfräsen zu durchtrennen, indem das Fräswerkzeug in der Tiefe zugestellt wird.

Alternativ kann zum Schluss ein Schlichten (Feinfräsen) der Außenseite bzw. Außenkontur des Formteils durchgeführt werden, um die Haltemembran zu perforieren, also abschnittsweise zu entfernen. Schließlich wird das Formteil - auch Fräsobjekt zu nennen - aus dem Rohling manuell herausgelöst, nachdem dieser aus der Fräsmaschine entnommen ist. Erwähntermaßen werden sodann Reste der durchtrennten bzw. durchbrochenen Haltemembran z.B. durch Schaben oder Fräsen mit einem Handwerkzeug entfernt.

Mit dem erfindungsgemäßen Verfahren können Rohlinge aus vorgesinterter Keramik wie Zirkonoxid und Aluminiumoxid aber auch dichtgesinterter Keramik entsprechender Materialien bearbeitet werden. Die umlaufende Verbindung zu dem Rohling ist vorteilhaft gegenüber der nach dem Stand der Technik benötigten punktuellen Anstiftung, die ein mit erheblichen Risiken verbundenes Nachbearbeiten des Formlings wie Käppchens oder Zahngerüsts erforderlich macht.

Die membranartige perforierte Verbindung zwischen dem Formteil und dem Rohling zeit den Vorteil, dass zum einen ein einfaches, nicht zu Beschädigungen führendes Entfernen bzw. Herauslösen des Formteils aus dem Rohling möglich ist und zum anderen nur geringe Nacharbeiten an dem Formteil selbst erforderlich werden.

Durch die erfindungsgemäße Lehre ergeben sich Vorteile insbesondere in folgender Hinsicht.
- Es ist eine Vereinfachung der CAD-Konstruktion z. B. eines Käppchens oder eines Brückengerüstes, Implantataufbaus oder einer Krone bzw. Primärkrone gegeben, da eine Anstiftung nicht modelliert werden muss.
- Es erfolgt eine exakte Herstellbarkeit der Außenkontur eines Käppchens, Brückengerüstes, Implantataufbaus oder einer Krone bzw. Primärkrone.
- Durch Minimierung der erforderlichen manuellen Nachbearbeitung ergibt sich eine Zeitersparnis.
- Eine Verbesserung des Fräsergebnisses ist durch gleichmäßigere zirkuläre Fräsbahnen auf der Außenseite möglich.
- Der Berechnungsvorgang bei der NC-Programmerstellung kann beschleunigt werden.
- Die Automatisierung wird vereinfacht.
- Durch die perforierte membranartige Verbindung zwischen dem Formteil (Käppchen, Brückengerüst, Implantataufbau, Krone oder Primärkrone) ist das Risiko vermieden, dass im Bereich der Verbindung zum Rohling minimale erforderliche Wandstärken unterschritten werden.
- Bei einer Verbindung in Form des umlaufenden Stegs bzw. zirkulären Rands kann das von dem Rohling gelöste Objekt unmittelbar von einer gepolsterten Aufnahme aufgefangen werden, ohne dass die Gefahr eines vorherigen Wegklappens des Formlings zu dem Rohling hin besteht.

Weitere Einzelheiten, Vorteile und Merkmale der Erfindung ergeben sich nicht nur aus den Ansprüche, den diesen zu entnehmenden Merkmalen - für sich und/oder in Kombination -, sondern auch aus der nachfolgenden Beschreibung eines der Zeichnung zu entnehmenden Ausführungsbeispiels.

Es zeigen:
- Fig. 1: eine Prinzipdarstellung eines nach dem Stand der Technik bearbeite- ten Käppchens,
- Fig. 2: eine der Fig. 1 entsprechende Prinzipdarstellung eines nach der erfin- dungsgemäßen Lehre bearbeiteten Käppchens,
- Fig. 3: eine der Fig. 1 entsprechende Prinzipdarstellung eines weiteren nach der erfindungsgemäßen Lehre bearbeiteten Käppchens und
- Fig. 4: eine Draufsicht auf das Käppchen gemäß Fig. 3.

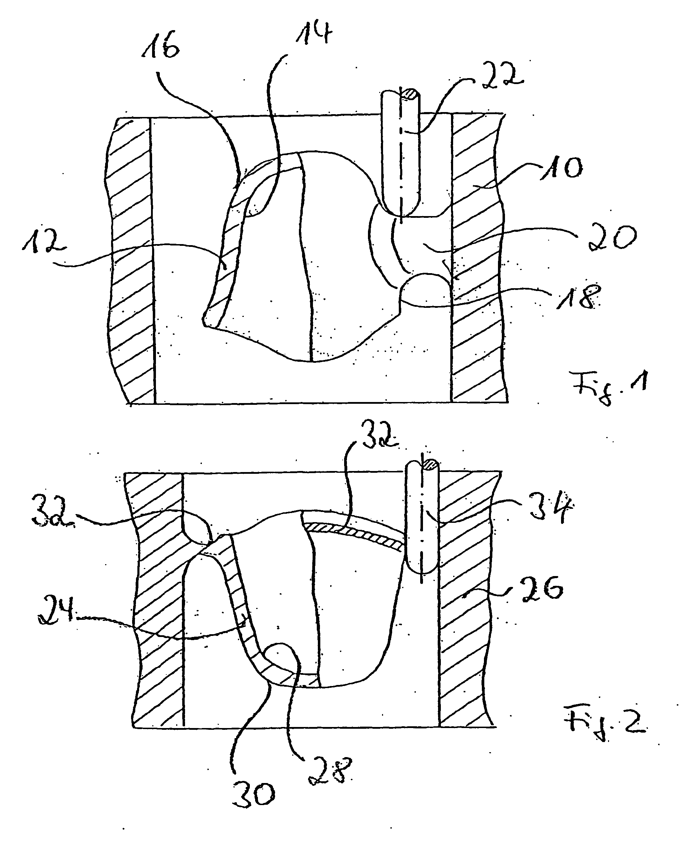

In Fig. 1 ist ein aus einem Rohling 10 herausgearbeitetes Käppchen 12 dargestellt, das z.B. nach der Lehre der WO-A-199947065 hergestellt sein kann. Mit anderen Worten wird in einer Produktionstechnik nach dem CAM-Verfahren aus dem Rohling 10 das Käppchen 12 mit einer inneren Fläche 14 oder Innenkontur und einer äußeren Fläche 16 oder Außenkontur durch Fräsen herausgearbeitet.

Hierzu wird zuvor ein Positivmodell abgetastet und digitalisiert. Die so gewonnenen Daten werden sodann einer Werkzeugmaschine wie Fräswerkzeug zugeführt, um das Käppchen 12 aus dem Rohling 10 herauszuarbeiten.

Nach dem durch die Fig. 1 verdeutlichten Stand der Technik bleibt das Käppchen 12 mit dem Rohling 10 über eine von einer äußeren Flanke (z. B. bukkal oder lingual) ausgehenden Anstiftung 20 verbunden (siehe z.B. auch Fig. 7, 9, 10 der WO-A-200245614), die nach der Bearbeitung der Innenfläche 14 und der Außenfläche 16 durch Abstrahlen entfernt wird. Auf Grund der Stärke der Anstiftung 20 kann der Nachteil auftreten, dass das Käppchen 12 vor dem endgültigen Durchtrennen der Anstiftung 20 wegkippt, also in Richtung des Rohlings 10 verschwenkt, so dass bei dünnwandigen Teilen die Gefahr einer Beschädigung erwächst. Nach dem Durchtrennen der Anstiftung ist in der Regel eine erhebliche manuelle Nachbearbeitung erforderlich, um die Wandstärke des Käppchens 12 im Bereich der zuvorigen Anstiftung an die übrige Wandstärke anzupassen.

Bei weichen bzw. spröden Werkstoffen besteht dabei das Risiko, dass die Wandung durchbricht bzw. dass Mindestwandstärken unterschritten werden.

Erfindungsgemäß kann ein Formteil - im Ausführungsbeispiel der Fig. 2 ein Käppchen 24 - aus einem Rohling 26 nach einem geeigneten CAD/CAM-System hergestellt werden, wobei das Käppchen 24 nach vollständiger Bearbeitung von Innenkontur 28 und Außenkontur 30 über einen umlaufenden, also zirkulären Rand oder Steg 32 mit dem Rohling 26 verbunden bleibt. Dabei ersteckt sich der umlaufende Steg 32 im äußeren Randbereich des Käppchens 24 selbst. Nach der Beendigung der Bearbeitung der Innen- und Außenkontor 28, 30 erfolgt durch zirkuläres Fräsen mit einem Werkzeug 34 ein Durchtrennen des umlaufenden Stegs 32, wobei das Werkzeug 34 in der Tiefe zugestellt wird.

Dadurch, dass durch einen sehr schmalen Steg das Käppchen 24 mit dem verbliebenen Rohling 26 verbunden ist, kann ein Ausfräsen des umlaufenden Stegs 32 derart erfolgen, dass das Käppchen 24 quasi ohne Positionsänderung senkrecht herabfällt und von einer gepolsterten Aufnahme aufgefangen werden kann. Eine Nachbearbeitung im Trennbereich, also im äußeren Rand, ist nur minimal erforderlich, ohne dass die Gefahr eines Bruchs oder die Möglichkeit, dass unzulässig dünne Wandstärken entstehen, gegeben ist.

Um das Käppchen 24 aus dem Rohling 26 herauszuarbeiten, ist bevorzugterweise folgende Frässtrategie gegeben: zunächst erfolgt ein Schruppen, also Grobfräsen, von Außen- und Innenfläche bei mäanderförmiger Bewegung des Werkzeugs. Anschließend werden Außen- und Innenbereich in zirkulärer Strategie geschlichtet, d. h., durch Feinfräsen bearbeitet.

Bei den entsprechenden Schritten kann eine Dreiachsfräsbearbeitung mit zusätzlicher Wendemöglichkeit des Rohlings 26 zur Anwendung gelangen. Vor Durchtrennen des umlaufenden Stegs 32 erfolgt ein Schlichten der Innenseite bzw. -fläche 28 des Käppchens 24. Dabei wird zunächst die Kavität bearbeitet und sodann der umlaufende Steg bzw. Rand 32 durch zirkuläres Fräsen durchtrennt.

Erwähntermaßen bedarf es nur einer geringen manuellen Bearbeitung zum Entfernen von Stegresten, wodurch eine Risikominimierung erfolgt. Weitere Vorteile sind einfachere CAD-Modellierung, kürzere Fräsbahnberechnung, einfache Automatisierung. Ferner ist das fertige Formteil weitergehend fertiggestellt als eines mit Anstiftungsrest und damit höherwertig.

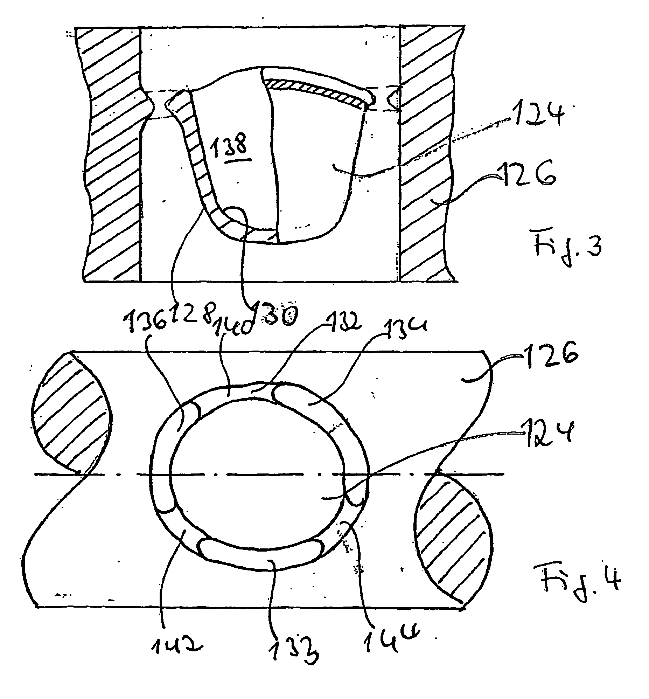

Im Ausführungsbeispiel der Fig. 3 und 4 wird ebenfalls rein beispielhaft ein Käppchen 124 aus einem Rohling 126 nach einem geeigneten CAD-CAM-Verfahren hergestellt, wobei das Käppchen 124 nach vollständiger Bearbeitung von Außenkontur 128 und Innenkontur 130 über eine umlaufende, also zirkuläre Membran 132 mit dem Rohling 126 verbunden ist, und zwar insbesondere im äußeren Randbereich und vorzugsweise im Bereich größten Umfangs des Käppchens 124. Dabei ist die Membran 132 perforiert. Im Ausführungsbeispiel sind insgesamt drei entlang eines Bogens verlaufende schlitzförmige Durchbrechungen 133, 134, 136 vorgesehen.

Um das Käppchen 124 aus dem Rohling 126 herauszuarbeiten, wird der Rohling 126 vorzugsweise einer Drei-Achs-Fräsbearbeitung unterzogen, wobei eine zusätzliche Wendeachse für den Rohling 126 vorgesehen ist. Hierzu kann der Rohling 126 in einen nicht dargestellten Rahmen eingespannt werden.

Als Frässtrategie ist vorgesehen, dass ein Grobfräsen (Schruppen) von außen und von innen erfolgt, wobei eine mäanderförmige Strategie verfolgt wird. Anschließend erfolgt ein Feinfräsen (Schlichten) der Außenfläche und der Innenfläche, wobei eine zirkuläre Strategie bevorzugt wird. Nach vollständiger Bearbeitung der Innenkontur 130, also Kavität 138 des Käppchens 124 wird die zwischen dem Rohling 126 und dem ausgebildeten Käppchen 124 verbliebene Haltemembran 132 perforiert, indem die einem Bogen folgenden Durchbrechungen 133, 134, 136 ausgebildet werden. Dies kann gleichfalls durch Fräsen erfolgen. Die Länge der zwischen den Durchbrechungen 133, 134, 136 verbleibenden Stege 140, 142, 144 sollte bevorzugterweise 1/5 bis 1/20 der Länge der Durchbrechungen 133, 134, 136, betragen. Andere Dimensionierungen oder eine andere Anzahl von Durchbrechungen zur Bildung der perforierten Haltemembran 132 sind gleichfalls möglich.

Unabhängig hiervon sollten die Haltemembran 132, also die Stege 140, 142, 144 eine Dicke von vorzugsweise 50 µm bis 500 µm aufweisen. Sodann wird der Rohling 126 aus dem Werkzeug, d. h. der Fräsmaschine entfernt, um das Käppchen 124 herauszutrennen. Dies kann manuell erfolgen oder durch ein messerartiges Werkzeug wie Skalpell. Schließlich werden die an der Außenseite des Käppchens 124 verbliebenen Reste der Haltemembran 132 zum Beispiel durch Schaben oder Fräsen mit einem Handwerkzeug entfernt.

Auf Grund der erfindungsgemäßen Lehre bedarf es nur einer geringen manuellen Nachbearbeitung zum Entfernen von Membranresten, wodurch eine Risikominimierung erfolgt. Weitere Vorteile sind in einer einfacheren CAD-Modellierung, kürzeren Fräsbahnberechnung und einfachen Automatisierung zu sehen. Ferner ist das Formteil weitergehend fertiggestellt als ein solches mit einem Steg und damit höherwertig.

Ist die Erfindung an Hand eines Käppchens als Ausführungsbeispiel erläutert worden, so ist die erfindungsgemäße Lehre auch zur Herstellung folgender Formteile geeignet: Brückengerüste, Kronen, Primärkronen und Inlays, Teilkronen und Implantataufbauten.

Aber nicht nur zur Herstellung dentaler Objekte ist die erfindungsgemäße Lehre bestimmt. Vielmehr können nach dieser auch sonstige insbesondere in der Technik einsetzbare Teile hergestellt werden. Beispielhaft sind rohrförmige Teile aus Zirkonoxid zu nennen, die z. B. als Reduzierhülsen in der Vakuumtechnik, als Röhrchen in der Medizin, als Lagersitz im Maschinenbau oder als Isolatoren in der Elektrotechnik/Elektronik einsetzbar sind.

Dabei werden entsprechende oder ähnliche Frässtrategien und entsprechende Ausbildungen eines Stegs bzw. einer Haltemembran vorgenommen.

## Patentansprüche

1. Verfahren zur Herstellung eines Formteils (24, 124), insbesondere dentalen Objekts wie Käppchen oder Brückengerüst, wobei das Formteil aus einem Rohling (26, 126) durch spanende Bearbeitung herausgearbeitet und die Bearbeitung mit Durchtrennen einer Verbindung (32, 132) zwischen dem Formteil und verbleibendem Rohling beendet wird,
**dadurch gekennzeichnet,**
**dass** das Formteil aus dem Rohling (26, 126) derart herausgearbeitet wird, dass bei Fertigstellung von Außen- und Innenkontur (28, 30, 128, 130) des Formteils dieser mit dem Rohling über eine Verbindung in Form eines umlaufenden Stegs am äusseren Rand des Formteils (32) oder einer Durchbrechungen aufweisenden membranartigen Verbindung verbunden bleibt und dass anschließend die Verbindung (132) durchtrennt wird.

2. Verfahren nach Anspruch 1,
**dadurch gekennzeichnet,**
**dass** der umlaufende Steg (32) durch zirkuläres Fräsen durchtrennt wird.

3. Verfahren nach Anspruch 1,
**dadurch gekennzeichnet,**
**dass** die membranartige Verbindung (132) durch manuelle Druckeinwirkung auf den Formling (124) zerstört wird.

4. Verfahren nach zumindest einem der vorhergehenden Ansprüche,
**dadurch gekennzeichnet,**
**dass** die membranartige Verbindung (132) mit einem messerartigen Werkzeug wie Skalpell durchtrennt wird.

5. Verfahren nach zumindest einem der vorhergehenden Ansprüche,
**dadurch gekennzeichnet,**
**dass** die membranartige Verbindung (132) bzw. der umlaufende Steg (32) im äußeren Randbereich und insbesondere im Bereich größten Umfangs des Formteils (124) ausgebildet wird.

6. Verfahren nach zumindest einem der vorhergehenden Ansprüche,
**dadurch gekennzeichnet,**
**dass** zur Herstellung des Formteils (24, 124) zunächst Außenkontur (28, 128) und sodann Innenkontur (30, 130) oder alternativ zunächst Innenkontur und sodann Außenkontur bearbeitet werden.

7. Verfahren nach zumindest einem der vorhergehenden Ansprüche,
**dadurch gekennzeichnet,**
**dass** zur Herstellung des Formteils (24, 124) zunächst ein Grobfräsen insbesondere mit mäanderformiger Strategie und sodann ein Feinfräsen insbesondere mit zirkulärer Strategie erfolgt.

8. Verfahren nach zumindest einem der vorhergehenden Ansprüche,
**dadurch gekennzeichnet,**
**dass** vor Durchtrennen der Verbindung ein Schlichten der Innenkontur (28, 128) und/oder Außenkontur (30, 130) erfolgt.

9. Verfahren nach zumindest einem der vorhergehenden Ansprüche,
**dadurch gekennzeichnet,**
**dass** unmittelbar vor Durchtrennen der Verbindung (32, 132) die Kavität des Formteils (24, 124) durch Feinfräsen bearbeitet wird.

10. Verfahren nach zumindest einem der vorhergehenden Ansprüche,
**dadurch gekennzeichnet,**
**dass** das von dem Rohling (26, 126) abgetrennte Formteil (24, 124) im Bereich der entfernten Verbindung (32, 132) zirkulär verputzt wird.

11. Verfahren nach zumindest einem der vorhergehenden Ansprüche,
**dadurch gekennzeichnet,**
**dass** bei Durchtrennen des umlaufenden Stegs (32) das Formteil (24) von einer gepolsterten Aufnahme in einer Position aufgefangen wird, die Position oder in etwa Position des Formteils in dem Rohling (26) entspricht.

12. Verfahren nach zumindest einem der vorhergehenden Ansprüche,
**dadurch gekennzeichnet,**
**dass** zunächst Kavität des Formteils (124) und sodann die membranartige Verbindung (132) zum Ausbilden der Durchbrechungen (133, 134, 136) bearbeitet werden.

13. Verfahren nach zumindest einem der vorhergehenden Ansprüche,
**dadurch gekennzeichnet,**
**dass** nach dem Herauslösen des Formteils (24, 124) an diesem verbliebene Reste durch manuelles Bearbeiten durch z. B. Schaben und/oder Fräsen entfernt werden.

14. Verfahren nach zumindest einem der vorhergehenden Ansprüche,
**dadurch gekennzeichnet,**
**dass** die Durchbrechung (133, 134, 136) als Schlitz ausgebildet wird.

15. Verfahren nach zumindest einem der vorhergehenden Ansprüche,
**dadurch gekennzeichnet,**
**dass** die Verbindung (132) derart bearbeitet wird, dass in dieser vorzugsweise drei langgestreckte und einem Bogenabschnitt oder bogenartigem Abschnitt folgenden Durchbrechungen (133, 134, 136) ausgebildet werden.

16. Verfahren nach zumindest einem der vorhergehenden Ansprüche,
**dadurch gekennzeichnet,**
**dass** die membranartige Verbindung (132) derart bearbeitet wird, dass im peripheren Bereich des Formteils sich Länge L_{D} der Durchbrechungen (133, 134, 136) zur Länge Lᵥ der diese unterteilenden Verbindungen zwischen dem Formteil und dem Rohling sich verhalten wie 1 : 20 ≤ L_{V} : L_{D} ≤ 1 : 5.

17. Verfahren nach zumindest einem der vorhergehenden Ansprüche,
**dadurch gekennzeichnet,**
**dass** der Rohling schwenkbar gelagert und mittels entlang drei Achsen bewegbaren Fräswerkzeugs bearbeitet wird.

18. Verfahren nach zumindest einem der vorhergehenden Ansprüche,
**dadurch gekennzeichnet,**
**dass** als Rohling (26, 126) ein solcher aus einem vorgesinterten Keramikrmaterial wie Zirkonoxid oder Aluminiumoxid verwendet wird.

19. Verfahren nach zumindest einem der vorhergehenden Ansprüche,
**dadurch gekennzeichnet,**
**dass** als Rohling (26, 126) ein solcher aus einem dichtgesinterten Keramikmaterial wie Zirkonoxid oder Aluminiumoxid verwendet wird.

## Claims

1. Method for producing a molded piece (24, 124), in particular dental object, such as cap or bridgework, whereby the molded piece is worked out from a blank (26, 126) by machine cutting, and the working is ended with the splitting of a connection (32, 132) between the molded piece and remaining blank,
**characterized in**
**that** the molded piece is worked out from the blank (26, 126) in such a way that, at completion of the outer and inner contour (28, 30, 128, 130) of the molded piece, it remains connected with the blank via a connection in form of a circumferential web (32) at the outer edge of the molded piece or a membranous connection exhibiting through holes, and that, subsequently, the connection (132) is split.

2. Method according to claim 1,
**characterized in**
**that** the circumferential web (32) is split by circular milling.

3. Method according to claim 1,
**characterized in**
**that** the membranous connection (132) is destroyed by manual pressure impact on the molded piece (124).

4. Method according to at least one of the previous claims,
**characterized in**
**that** the membranous connection (132) is split with a knife-like tool, such as a scalpel.

5. Method according to at least one of the previous claims,
**characterized in**
**that** the membranous connection (132), respectively the circumferential web (32), is formed in the outer edge region and, in particular, in the region of the largest extent of the molded piece (124).

6. Method according to at least one of the previous claims,
**characterized in**
**that** for the production of the molded piece (24, 124), at first the outer contour (28, 128) and then the inner contour (30, 130) is worked, or, alternatively, at first the inner contour and then the outer contour is worked.

7. Method according to at least one of the previous claims,
**characterized in**
**that** for the production of the molded piece (24, 124), a rough milling takes place first, in particular with a meander-shaped strategy and then a fine milling, in particular with circular strategy.

8. Method according to at least one of the previous claims,
**characterized in**
**that** before the connection is split, a smoothing of the inner contour (28, 128) and/or the outer contour (30, 130) takes place.

9. Method according to at least one of the previous claims,
**characterized in**
**that** directly before splitting the connection (32, 132), the cavity of the molded piece (24, 124) is worked by fine milling.

10. Method according to at least one of the previous claims,
**characterized in**
**that** the molded piece (24, 124) separated from the blank (26, 126) is cleaned circular in the region of the removed connection (32, 132).

11. Method according to at least one of the previous claims,
**characterized in**
**that**, when splitting the circumferential weg (32), the molded piece (24) is caught by a padded receptacle in a position, which corresponds to the position, or approximately to the position of the molded piece in the blank (26).

12. Method according to at least one of the previous claims,
**characterized in**
**that** at first cavity of the molded piece (124) is worked and then the membranous connection (132) for forming the through holes (133, 134, 136).

13. Method according to at least one of the previous claims,
**characterized in**
**that** after separation of the molded piece (24, 124) remainders stayed on it are removed though manual working, e.g. by scraping and/or milling.

14. Method according to at least one of the previous claims,
**characterized in**
**that** the through hole (133, 134, 136) is designed as slot.

15. Method according to at least one of the previous claims,
**characterized in**
**that** the connection (132) is worked in such a way that in this, preferably three elongated through holes (133, 134, 136) are formed following an arc section or arc-like section.

16. Method according to at least one of the previous claims,
**characterized in**
**that** the membraneous connection (132) is worked in such a way that, in the peripheral region of the molded piece, the ratio of the length L_{D} of the through holes (133, 134, 136) is 1:20 ≤ Lᵥ:L_{D}≤ 1:5 relative to the length Lᵥ of the connections dividing the same between the molded piece and the blank.

17. Method according to at least one of the previous claims,
**characterized in**
**that** the blank is arranged so as to be rotatable and is worked by means of a milling tool movable along three axes.

18. Method according to at least one of the previous claims,
**characterized in**
**that** as blank (26, 126) is used one made of a pre-sintered ceramics material such as zircon oxide or aluminum oxide.

19. Method according to at least one of the previous claims,
**characterized in**
**that** as blank (26, 126) is used one made of a densely sintered ceramics material such as zircon oxide or aluminum oxide.

## Revendications

1. Procédé pour la production d'une pièce usinée (24, 124), en particulier d'un objet dentaire tel qu'une couronne ou un bridge dentaire, sachant que la pièce usinée est façonnée à partir d'une ébauche (26, 126) par usinage par enlèvement de copeaux, et que l'usinage est achevé par le sectionnement d'une jonction (32, 132) située entre la pièce usinée et l'ébauche restante,
**caractérisé en ce**
**que** la pièce usinée provenant de l'ébauche (26, 126) est façonnée de telle manière que lors de la finition des contours extérieur et intérieur (28, 30, 128, 130) de la pièce usinée, celle-ci reste liée à l'ébauche par le biais d'une jonction ayant la forme d'une nervure périphérique (32) sur le bord extérieur de la pièce usinée, ou par une jonction membraneuse présentant des ouvertures (132), et que la jonction est ensuite sectionnée.

2. Procédé selon la revendication 1,
**caractérisé en ce**
**que** la nervure périphérique (32) est sectionnée par un fraisage circulaire.

3. Procédé selon la revendication 1,
**caractérisé en ce**
**que** la jonction membraneuse (132) est détruite par compression manuelle sur la pièce usinée (124).

4. Procédé selon au moins l'une des revendications précédentes,
**caractérisé en ce**
**que** la jonction membraneuse (132) est sectionnée par un outil tranchant tel qu'un scalpel.

5. Procédé selon au moins l'une des revendications précédentes,
**caractérisé en ce**
**que** la jonction membraneuse (132), ou la nervure périphérique (32), est formée dans la zone du bord extérieur et en particulier dans la zone de la plus grande circonférence de la pièce usinée (124).

6. Procédé selon au moins l'une des revendications précédentes,
**caractérisé en ce**
**que**, pour fabriquer la pièce usinée (24, 124), est façonné dans un premier temps le contour extérieur (28, 128), puis le contour intérieur (30, 130), ou en alternative d'abord le contour intérieur, puis le contour extérieur.

7. Procédé selon au moins l'une des revendications précédentes,
**caractérisé en ce**
**que**, pour fabriquer la pièce usinée (24, 124), est effectué tout d'abord un fraisage dégrossissant en particulier en décrivant des méandres, puis un fraisage précis en décrivant des cercles.

8. Procédé selon au moins l'une des revendications précédentes,
**caractérisé en ce**
**qu'**un finissage du contour intérieur (28, 128) et/ou du contour extérieur (30, 130) est effectué avant le sectionnement de la jonction.

9. Procédé selon au moins l'une des revendications précédentes,
**caractérisé en ce**
**que** la cavité de la pièce usinée (24, 124), est façonnée par un fraisage précis juste avant le sectionnement de la jonction (32, 132).

10. Procédé selon au moins l'une des revendications précédentes,
**caractérisé en ce**
**que** la pièce usinée (24, 124) séparée de l'ébauche (26, 126) est enduite circulairement dans la zone de la jonction (32, 132) retirée.

11. Procédé selon au moins l'une des revendications précédentes,
**caractérisé en ce**
**que**, lors du sectionnement de la nervure périphérique (32), la pièce usinée (24) est recueillie par un logement rembourré dans une position qui correspond, ou qui correspond approximativement, à la position de la pièce usinée dans l'ébauche (26).

12. Procédé selon au moins l'une des revendications précédentes,
**caractérisé en ce**
**qu'**est façonnée tout d'abord la cavité de la pièce usinée (124) puis la jonction membraneuse (132) afm de former les ouvertures (133, 134, 136).

13. Procédé selon au moins l'une des revendications précédentes,
**caractérisé en ce**
**que** les restes subsistants sur la pièce usinée (24, 124) suite à son détachement sont retirés par un travail manuel, par exemple, un raclage et/ou un fraisage.

14. Procédé selon au moins l'une des revendications précédentes,
**caractérisé en ce**
**que** l'ouverture (133, 134, 136) a la forme d'une fente.

15. Procédé selon au moins l'une des revendications précédentes,
**caractérisé en ce**
**que** la jonction (132) est façonnée de telle sorte que de préférence soient formées dans elle trois sections allongées et une section coudée, ou une section incurvée, succédant aux ouvertures (133, 134, 136).

16. Procédé selon au moins l'une des revendications précédentes,
**caractérisé en ce**
**que** la jonction membraneuse (132) est façonnée de telle manière que dans la zone périphérique de la pièce usinée, la longueur Lo des ouvertures (133, 134, 136) et la longueur L_{J} des jonctions les séparant entre la pièce usinée et l'ébauche sont telles que 1 : 20 ≤ L_{J} : L_{O} ≤ 1 : 5.

17. Procédé selon au moins l'une des revendications précédentes,
**caractérisé en ce**
**que** l'ébauche est logée de manière pivotante et est usinée par trois outils de fraisage mobiles le long de trois axes.

18. Procédé selon au moins l'une des revendications précédentes,
**caractérisé en ce**
**que**, pour l'ébauche (26, 126), un matériau provenant d'un matériau céramique préfritté tel que de la zircone ou de l'oxyde d'aluminium est utilisé.

19. Procédé selon au moins l'une des revendications précédentes,
**caractérisé en ce**
**que**, pour l'ébauche (26, 126), un matériau provenant d'un matériau céramique fritté à densité maximale tel que de la zircone ou de l'oxyde d'aluminium est utilisé.
